# EUROPÄISCHE PATENTSCHRIFT

(11) **EP 3 286 012 B1**
(45) Veröffentlichungstag und Bekanntmachung des Hinweises auf die Patenterteilung: **20.03.2019**
(21) Anmeldenummer: 16717258.4
(22) Anmeldetag: 20.04.2016
(51) Int. Cl.: B42D 25/23, B42D 25/24, B42D 25/324, B42D 25/328, B42D 25/378, B42D 25/351, B42D 25/45

(54) **MEHRSCHICHTIGES SICHERHEITSELEMENT**
MULTILAYER SECURITY ELEMENT
ÉLÉMENT DE SÉCURITÉ MULTICOUCHE

(30) Priorität: 21.04.2015 DE 102015005082
(43) Veröffentlichungstag der Anmeldung: 28.02.2018
(73) Patentinhaber: Giesecke+Devrient Mobile Security GmbH, 81677 München (DE)
(72) Erfinder: ENDRES, Günter, 81547 München (DE); KOHL, Klaus, 83714 Miesbach (DE); ROSATI, Tobias, 85375 Neufahrn bei Freising (DE)
(86) Internationale Anmeldenummer: PCT/EP2016/000641
(87) Internationale Veröffentlichungsnummer: WO 2016/169650

(56) Entgegenhaltungen:
- EP-A1- 2 559 563
- EP-A2- 0 219 011
- FR-A1- 3 007 318

## Beschreibung

Die Erfindung betrifft ein mehrschichtiges Sicherheitselement, das unter anderem als Datenseite oder als Ausweiskarte einsetzbar ist. Insbesondere betrifft die Erfindung ein mehrschichtiges Sicherheitselement in Form eines Flächenkörpers, der zumindest einen transparenten oder transluzenten Bereich aufweist. Der Bereich kann ein Fenster sein. Die Erfindung betrifft außerdem ein Verfahren zur Herstellung eines Sicherheitselementes.

Ein gattungsgemäßes Sicherheitselement in Form einer Ausweiskarte ist aus der EP 2 275 279 A1 bekannt. Das beschriebene Ausweisdokument ist aus mehreren Schichten aufgebaut, zwei Außenschichten und einer Zentralschicht, die durch Laminieren zu einem Flächenkörper verbunden sind. Die Außenschichten bestehen aus einem transparenten Material, die Zentralschicht aus einem opaken. In der Zentralschicht befindet sich eine Ausnehmung, in die passergenau ein Fensterelement eingesetzt ist. Das Fensterelement ist dazu ausgebildet eine versteckte Information sichtbar zu machen. Die bekannte Lösung ist wirksam, aber auch aufwendig herzustellen. Insbesondere ist die passergenaue Einpassung des Fensterelementes in die Zentralschicht herstellungstechnisch anspruchsvoll. Die bekannte Lösung eignet sich deshalb z.B. in der Regel dann nicht, wenn ein kostengünstiges kartenförmiges Sicherheitselement mit einem transluzenten oder transparenten Bereich versehen werden soll.

Aus der EP 1 719 637 A2 ist ein mehrschichtiges Sicherheitsdokument mit einem Fenster bekannt, in dem Sicherheitselemente angeordnet sind. Das Sicherheitsdokument umfasst eine opake Kernschicht, eine transparente UVundurchlässige Schicht sowie zwei transparente Schutzschichten. Aus der Kernschicht ist eine Ausnehmung ausgestanzt, die im fertigen Sicherheitsdokument das Fenster bildet. Die Schichten sind durch Anwendung von Wärme und Druck miteinander verbunden. Die Sicherheitselemente sind als Druckmuster aus UV-fluoreszierender Farbe auf beiden Seiten der UV-undurchlässigen Schicht ausgebildet. Wird das Sicherheitsdokument mit einer Oberseite in UV-Licht gebracht, erkennt ein Betrachter in dem Fenster das Druckmuster des zugewandten Sicherheitselementes auf der UV-undurchlässigen Schicht. Werden gleichzeitig beide Oberseiten des Sicherheitsdokumentes in UV-Licht gebracht, erkennt ein Betrachter in dem Fenster gleichzeitig die auf beiden Seiten der UV-undurchlässigen Schicht plazierten Druckmuster beider Sicherheitselemente. Grundlage der bekannten Lösung ist die Möglichkeit, zwei an sich separate gedruckte Sicherheitselemente gleichzeitig sichtbar zu machen. Dies bedingt, daß das Sicherheitsdokument ein Fenster besitzt. Die Lösung eignet sich nicht für vollflächig opake Sicherheitselemente.

Aus der EP 219 011 A2 ist mehrschichtiges Sicherheitselement gemäß dem Oberbegriff des Anspruchs 1 bekannt, das zwei transparente Schichten aufweist, zwischen denen eine opake Schicht mit einem Freischnitt angeordnet ist. In dem Bereich des Freischnitts wird ein Sicherheitsmerkmal in Gestalt eines Parallaxenbildes ausgebildet.

Es ist Aufgabe der vorliegenden Erfindung ein als Ausweiskarte oder Datenseite verwendbares Sicherheitselement anzugeben, das ein Sicherheitsmerkmal sowie einen transparenten oder transluzenten Bereich aufweist und das einfach herstellbar ist.

Diese Aufgabe wird gelöst durch ein Sicherheitselement mit den Merkmalen des Hauptanspruchs. Sie wird ebenso gelöst durch ein Verfahren mit den Merkmalen des unabhängigen Verfahrensanspruchs. Das erfindungsgemäße Sicherheitselement zeichnet sich durch eine hervorragende Planarität seiner Oberflächen aus, ohne dass zu seiner Herstellung besondere anspruchsvolle Verfahrensschritte erforderlich sind. Ein weiterer Vorteil ist, dass in einem ansonsten opaken Flächenkörper auf einfache Weise Innenfenster geschaffen werden können, in deren Einsichtbereichen Sicherheitsmerkmale ausgebildet sind. Bei entsprechender Anordnung werden die Sicherheitsmerkmale deutlich in unterschiedlichen Tiefenlagen wahrgenommen. Unterstützt wird der Eindruck einer unterschiedlichen Tiefenlage, indem die Sicherheitsmerkmale auf oder in einer Schicht ausgebildet werden, die unter Zwischenlage einer transparenten Funktionsschicht unter der das Innenfenster definierenden opaken Schicht angeordnet ist.

Die Innenfenster können dabei nahezu beliebig gestaltete Randkonturen aufweisen. Erreicht wird dies, indem die Ausbildung von transparenten oder von transmissiven Bereichen nicht durch Bereitstellung von speziell dafür vorgesehenem transparentem oder transmissivem Material erreicht wird, sondern beim Laminieren erfolgt, indem Freischnitte mit Material der angrenzenden transmissiven Aufbauschichten aufgefüllt werden.

Besonders gute Ergebnisse werden erreicht, wenn das Material der Funktionsschichten eine Dicke von weniger als 100 µm besitzt. Besonders vorteilhaft ist es weiter, wenn als Material für die Aufbauschichten Polycarbonat gewählt wird oder ein im wesentlichen aus Polycarbonat bestehendes Material. Besonders vorteilhaft weist das mehrschichtige Sicherheitselement zwei opake Funktionsschichten auf, die unter Zwischenlage einer Merkmalträgerschicht einander gegenüberliegen. Auf der Merkmalträgerschicht sind Sicherheitsmerkmale ausgebildet, die von beiden Seiten betrachtet werden können. Vorteilhaft können dabei unterschiedliche Wahrnehmungen realisiert werden. In einer besonders zweckmäßigen Ausgestaltung sind die Freischnitte in den Funktionsschichten so angeordnet, dass sie entlang einer Linie plaziert sind, sich jedoch nicht überlappen. Wird dazu eine Merkmalträgerschicht zwischen den Funktionsschichten angeordnet, lässt sich in vorteilhafter Weise der Effekt eines Sicherheitsfadens erzielen, wie er von Banknoten her bekannt ist.

Unter Bezugnahme auf die Zeichnung werden nachfolgend Ausführungsbeispiele der Erfindung näher erläutert. Es zeigen:
- Fig. 1: im Querschnitt das Grundprinzip des Aufbaus eines Sicherheitselements,
- Fig. 2: im Querschnitt Varianten eines Sicherheitselements mit weiteren Aufbauschichten und weiteren Sicherheitsmerkmalen,
- Fig. 3: im Querschnitt ein Sicherheitselement mit zwei Funktionsschichten, die einen Sicherheitsfaden nachbilden, und
- Fig. 4: im Querschnitt ein Sicherheitselement mit zwei sich teilweise gegenüberliegenden Innenfenstern.

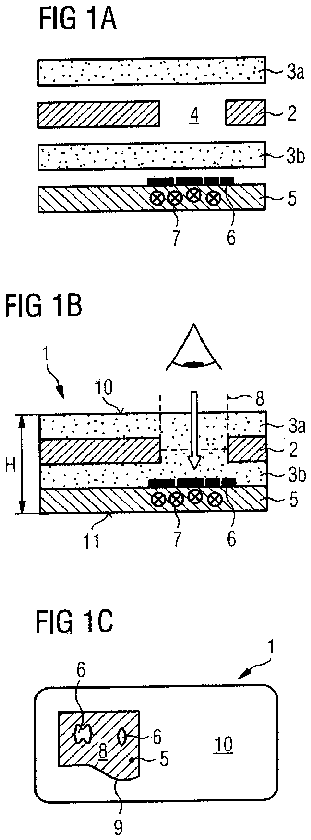

Fig. 1 veranschaulicht den prinzipiellen Grundaufbau eines Sicherheitselementes 1, Fig. 1a zeigt in Explosionsdarstellung einen Zustand vor dem Laminieren, Fig.1b den Zustand nach dem Laminieren, Fig. 1c eine Aufsicht auf ein Sicherheitselement auf die das Innenfenster aufweisenden Seite. Der Grundaufbau besteht aus einer Funktionsschicht 2, die zwischen zwei Aufbauschichten 3a, 3b angeordnet ist. Unter der Aufbauschicht 3b ist eine Merkmalträgerschicht 5 angeordnet. Die Aufbauschichten 3a, 3b bestehen aus einem transmissiven Material, d.h. aus einem transparenten oder transluzenten Material, oder in anderen Worten: aus einem Material, das für das menschliche Auge durchsichtig bis milchig ist, jedoch nicht völlig undurchsichtig. Die Funktionsschicht 2 besteht aus einem opaken Material oder zumindest aus einem Material, das weniger transmissiv ist als die Aufbauschichten 3a, 3b. Die Merkmalträgerschicht 5 besteht ebenfalls aus einem opaken Material oder einem Material, das zumindest weniger transmissiv ist als die Aufbauschichten 3a, 3b.

In der Funktionsschicht 2 ist ein Freischnitt 4 ausgebildet. Er definiert im fertigen Sicherheitselement 1 ein Innenfenster 8. Der Freischnitt 4 ist vollständig mit Material der Aufbauschichten 3a, 3b ausgefüllt.

Auf der Merkmalträgerschicht 5 ist zumindest ein Sicherheitsmerkmal 6, 7 ausgebildet, das sich zumindest teilweise in die Fläche des Freischnittes 4 erstreckt. D.h. das Sicherheitsmerkmal 6, 7 liegt ganz oder teilweise im Einsichtbereich des Innenfensters 8. Die Ausbildung des Sicherheitsmerkmals 6, 7 geschieht zweckmäßig vor dem Verbinden der Merkmalträgerschicht 5 mit den anderen Schichten.

Das Sicherheitsmerkmal 6, 7 kann ein oberflächlich aufgebrachtes Sicherheitsmerkmal 6 sein, etwa in Form eines Druckmusters, oder in Form körperlicher Elemente, etwa eines Hologramms. Alternativ oder ergänzend kann die Merkmalsschicht 5 eingebettete Sicherheitsmerkmale 7 enthalten, z.B. Farbpartikel oder fluoreszierende Elemente.

Neben den genannten können beliebige andere bekannte Sicherheitsmerkmale in oder auf der Merkmalträgerschicht 5 realisiert sein. In Betracht kommen beispielsweise Merkmale, die nur unter Anregung mit elektromagnetischer Strahlung sichtbar werden oder Merkmale, die durch Verformung der Merkmalträgerschicht 5 realisiert sind. Auch können manche Sicherheitsmerkmale erst nach dem Laminieren erzeugt werden, etwa durch Lasern. Ohne weiteres ist es ferner möglich die Merkmalträgerschicht 5 in Form einer Mehrschichtstruktur mit mehreren Einzelschichten auszubilden, die unterschiedliche Sicherheitsmerkmale tragen. Dieselben oder andere Sicherheitsmerkmale 6, 7 können ferner auch außerhalb des Innenfensters 8 ausgebildet sein.

Ein Sicherheitsmerkmal kann auch bereits durch die Beschaffenheit der Merkmalträgerschicht 5 gebildet sein, insbesondere durch deren Eigenfarbe oder Oberflächenbeschaffenheit. In einer sehr einfachen und kostengünstigen Variante können besondere, zusätzlich eingebrachte Sicherheitsmerkmale 6, 7 entfallen und nur die Beschaffenheit der Merkmalträgerschicht 5 ein Sicherheitsmerkmal bilden.

Da sie in der Fläche des Freischnittes 4 liegen, kann - wie in Fig. 1b angedeutete - ein Betrachter in lotrechter Aufsicht auf das Sicherheitselement 1 die Sicherheitsmerkmale 6, 7 erkennen.

Die Schichten 2, 3a, 3b und 5 werden in der Regel in Form von Folien bereitgestellt. Die Folien werden durch Laminieren miteinander zu einem Flächenkörper verbunden, dessen Gestalt durch eine obere und eine untere Oberfläche 10, 11 bestimmt wird und eine im Vergleich zur Größe der Oberflächen 10,11 geringe Dicke aufweist. Die Oberflächen 10, 11 sind plan und liegen in der Regel planparallel zueinander.

Fig. 1a zeigt in einer Explosionsdarstellung die Schichten 2, 3a, 3b, 5 eines Grundaufbaus vor dem Laminieren, Fig. 1b einen durch Laminieren daraus erzeugten Flächenkörper mit planen Oberflächen 10, 11. Der Flächenkörper bildet den Körper des Sicherheitselements 1. Beim Laminieren fließt Material der Aufbauschichten 3a, 3b in den Freischnitt 4 und füllt diesen vollständig aus. Bestehen die Aufbauschichten 3a, 3b aus einem transparenten und die Funktionsschicht 2 aus einem opaken Material, weist das fertige Sicherheitselement 1 im Grundaufbau damit ein Innenfenster 8 auf, das ein Betrachter - wie in Fig. 1b angedeutet - leicht erkennen kann, wenn er in lotrechter Aufsicht auf die Oberfläche 10 der das Innenfenster 8 enthaltenden Seite des Sicherheitselementes 1 blickt. Das Laminieren erfolgt mit üblichen Parametern.

Die Funktionsschicht 2 kann mehrere Freischnitte 4 aufweisen. Jeder Freischnitt 4 wird durch eine Randkontur 9 begrenzt. Die Geometrie der Freischnitte 4 kann in einem weiten Rahmen frei gewählt werden. Die Randkontur 9 eines Freischnittes 4 kann dabei aus Abschnitten von Polygonzügen bestehen, Kurvenabschnitte mit Kurven in unterschiedlichen Radien enthalten und/oder Winkel mit unterschiedlichen Öffnungswinkeln aufweisen.

Fig. 1c zeigt eine Aufsicht auf die das Innenfenster 8 aufweisende Seite eines Sicherheitselements 1. Die dargestellten Formgebungen sind rein beispielhaft und sollen in keiner Weise begrenzend verstanden werden. Die Aufsicht veranschaulicht die freie Gestaltbarkeit der Geometrie der Freischnitte 4 und der aus diesen resultierenden Innenfenster 8. Diese können, wie angedeutet, frei geformte Randkonturen 9 besitzen. In dem Innenfenster 8 sind Sicherheitsmerkmale 6 erkennbar, die im Beispiel der Fig. 1c Druckmuster sind. Das Sichtfeld eines Betrachters bei der Aufsicht auf das Innenfenster 8 wird in der Tiefe durch die Merkmalträgerschicht 5 begrenzt.

Die Dicke der Funktionsschicht 2 liegt zweckmäßig bei unter 125µm, vorzugsweise bei unter 100 µm. Größere Dicken sind gleichwohl möglich. Die Dicke der Aufbauschichten 3 kann in einem weiten Bereich frei gewählt werden. Typischerweise liegt sie für eine einzelne Aufbauschicht 3a, 3b zwischen 50 und 500 µm. Die Dicke der an eine Funktionsschicht 2 mit Freischnitt 4 angrenzenden Aufbauschichten 3 ist zweckmäßig so gewählt, dass die Aufbauschichten 3 genügend Material bereitstellen, um die Freischnitte 4 aufzufüllen, ohne dass es zu einer unerwünschten Verringerung der Dicke der Aufbauschicht 3 kommt. Die Dicke der der Merkmalträgerschicht 5 entspricht typischerweise der Dicke einer Aufbauschicht und liegt zwischen 50 und 500 µm. Die Gesamtdicke H eines Sicherheitselementes 1 liegt typischerweise zwischen 300 und 1000 µm.

Das Material der Funktionsschicht 2 ist bevorzugt Polycarbonat. Alternativ kommen ggf. Mischungen von Polycarbonat mit anderen Kunststoffen in Betracht. Dem Polycarbonat können Zusätze zur Verbesserung der Materialeigenschaften oder des Materialverhaltens beigemischt sein. Zusätze können etwa dazu dienen, beim Laminieren die Erweichungstemperatur heraufzusetzen oder eine Schrumpfung des Materials zu unterdrücken.

Ebenso bestehen die Aufbauschichten 3a, 3b bevorzugt aus Polycarbonat; wiederum kommen daneben ggf. Mischungen von Polycarbonat mit anderen Kunststoffen in Betracht. Dem Polycarbonat können ebenfalls Zusätze zur Verbesserung der Materialeigenschaften oder des Materialverhaltens beigemischt sein. Zweckmäßig bestehen die Aufbauschichten 3a, 3b ferner aus demselben Material. In Varianten ist auch denkbar, dass die Aufbauschichten 3a, 3b aus unterschiedlichen Materialien bestehen. Dabei kann vorgesehen sein, dass nur eines der Materialien beim Laminieren in die Freischnitte 4 fließt und diese ausfüllt.

Die Merkmalträgerschicht 5 besteht zweckmäßig ebenfalls aus Polycarbonat.

Funktionsschichten 2 und Aufbauschichten 3 werden typischerweise in Form von Folien bereitgestellt, die vor dem Laminieren flexibel sind. Beim Laminieren verbinden sich Funktionsschichten 2 und Aufbauschichten 3 zu einem relativ steifen Flächenkörper, der aber dennoch eine ausreichende Biegeelastizität besitzt. Zweckmäßig genügt der Flächenkörper den physikalischen Vorgaben, wie sie aus einschlägigen Normen entnehmbar sind, z.B. aus der für Chipkarten einschlägigen ISO 7810.

Beim Laminieren kommt es in manchen Fällen zu einer leichten Schrumpfung der Geometrien der Freischnitte 4. Ecken und Spitze Winkel bleiben dabei typischerweise erhalten. Die Schrumpfung ist bei der Gestaltung der Freischnitte 4 zu berücksichtigen. Typischerweise beträgt die Schrumpfung 2 bis 10 %.

Ausgehend von dem in Fig. 1 veranschaulichten Grundaufbau kann ein Sicherheitselement 1 weitere Funktionsschichten 2 und Aufbauschichten 3 sowie weitere Schichten anderer Art enthalten. Die Schichten bzw. der Flächenkörper können zudem mit Sicherheitsmerkmalen wie Druckmustern oder Fremdstoffen versehen sein oder Bauelemente tragen, insbesondere optische und/oder elektronische Bauelemente.

Das Sicherheitselement 1 kann insbesondere ein Standardkartenformat besitzen und z.B. eine Ausweis-, eine Bank-, eine Kredit-oder eine Chipkarte sein. Ebenso kann das Sicherheitselement 1 eine SIM-Karte, eine Datenseite für einen Passbuch, eine Token oder ein Schlüsselanhänger sein. Die Form des Sicherheitselements 1 ist dabei nicht auf die Grundform eines Rechtecks beschränkt sondern kann beliebige andere Geometrie aufweisen und zum Beispiel eine Tropfenform, eine Dreiecksform oder die Gestalt eines alphanumerischen Zeichens besitzen.

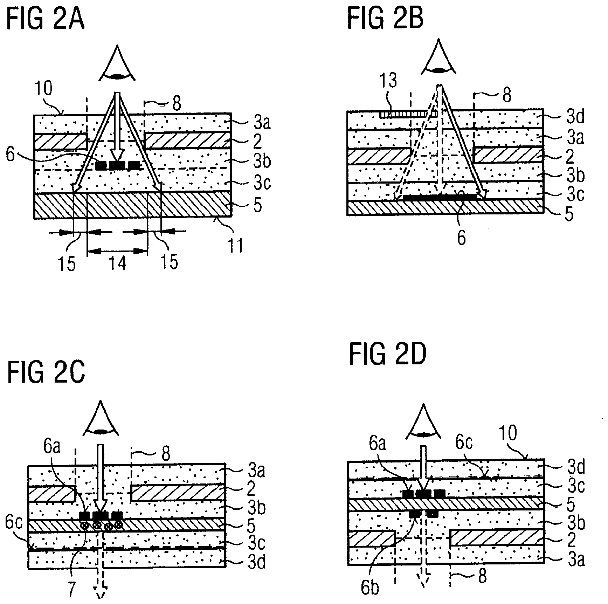

Fig. 2 veranschaulicht Ausführungsformen eines Sicherheitselements 1, in der das Sicherheitselement neben den Schichten 3a, 2, 3b, 5 eines Grundaufbaus noch weitere Aufbauschichten aufweist.

Fig. 2a zeigt eine Variante, die im Grundsatz dem Grundaufbau nach Fig. 1 entspricht. Anders als bei diesem ist zwischen der Funktionsschicht 2 und der Merkmalträgerschicht 5 aber noch eine weitere, dritte Aufbauschicht 3c so angeordnet, dass sie an die Aufbauschicht 3b des Grundaufbaus angrenzt. Zwischen Funktionsschicht 2 und Merkmalträgerschicht 5 sind also aneinanderliegend zwei Aufbauschichten 3b, 3c angeordnet. In der Ebene zwischen der weiteren Aufbauschicht 3c und der angrenzenden Aufbauschicht 3b ist ein Sicherheitsmerkmal 6 ausgebildet, das, wie in der Fig. 2a angedeutet, zum Beispiel die Form eines Druckmusters besitzen kann. Das Sicherheitsmerkmal 6 ist technisch zweckmäßig an der Unterseite der Aufbauschicht 3b oder auf der Oberseite der dritten Aufbauschicht 3c ausgebildet. Es kann auch innerhalb einer der Aufbauschichten realisiert sein.

Sieht ein Betrachter - wie in Fig. 2a angedeutet - von oben von der das Innenfenster 8 enthaltenden Seite auf des Sicherheitselement 1, erkennt er durch das Innenfenster 8 in dem durch das Innenfenster 8 bestimmten offenen Einsichtbereich 14 deutlich das Druckmuster 6. Das Sichtfeld des Betrachters wird begrenzt durch die Merkmalträgerschicht 5. Es schließt- wie in Fig. 2a angedeutet - einen überdeckten Bereich 15 ein, der unterhalb der Funktionsschicht 2 liegt. Der überdeckte Bereich 15 erscheint als Verschattung, die einen Rahmen um den in dem Innenfenster 8 liegenden, offen einsehbaren Bereich bildet. Durch die wahrgenommene Verschattung entsteht für den Betrachter der Eindruck, als läge der offene Einsichtbereich 14 auf der Funktionsschicht 2 sehr viel tiefer unter der opaken Funktionsschicht 2 als dies in der Realität der Fall ist.

Der durch die Verschattung bewirkte Effekt einer großen Tiefe tritt in gleicher Weise auch bei den anderen Ausführungsformen gemäß den Fig. 1 bis 3 ein; er ist dort aus Gründen der Übersichtlichkeit nicht dargestellt.

Fig. 2b zeigt eine Variante, in der eine erste zusätzliche Aufbauschicht 3c zwischen Merkmalträgerschicht 5 und Funktionsschicht 2 und eine zweite zusätzliche Aufbauschicht 3d auf der abgewandten Seite der Funktionsschicht 2 angeordnet ist. Auf der Merkmalträgerschicht 5 ist ein Sicherheitsmerkmal in Form eines Druckmusters 6 ausgebildet. In der zweiten zusätzlichen Aufbauschicht 3d ist ein weiteres Sicherheitsmerkmal 13, z.B. ein Hologramm oder ein Druckmuster, ausgebildet, das im Beispiel der Fig. 2b teilweise im Innenfenster 8 liegt.

Einem - wie in Fig. 2b angedeutet - lotrecht auf das Sicherheitselement 1 blickenden Betrachter erscheint bei dem in Fig. 2b dargestellten Ausführungsbeispiel das Innenfenster 8 als Vertiefung. In dem Innenfenster 8 erkennt der Betrachter das weitere Sicherheitsmerkmal 13 sowie weiterhin das Druckmuster 6. Beide überlagern sich, wobei die unterschiedliche Tiefenlage wahrgenommen wird. Die Wahrnehmung der unterschiedlichen Tiefenlage wird durch die Wahrnehmung einer Verschattung verstärkt. Der Verschattungseindruck entsteht, wie anhand von Fig. 2a erläutert, durch das Sichtfeld des Betrachters, das, wie durch Pfeile angedeutet, sowohl Bereiche erfaßt, die unterhalb des weiteren Sicherheitsmerkmals 13 liegen, als auch Bereiche, die unterhalb der Funktionsschicht 2 liegen.

Die Ausführung nach Fig. 2b läßt sich mit der Ausführung nach Fig. 2a und ebenso mit den anderen Ausführungsformen kombinieren.

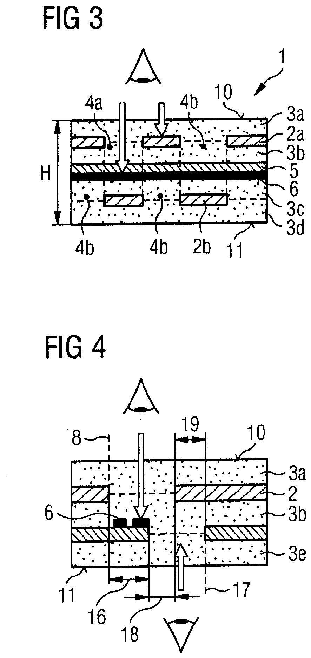

In Fig. 2c sind zwei weitere Aufbauschichten 3c, 3d auf der abgewandten Seite der Merkmalträgerschicht 5 angeordnet. Die Funktionsschicht 2 ist opak und weist Freischnitte 4 auf. Die Merkmalträgerschicht 5 ist in diesem Fall, anders als beim Grundaufbau nach Fig. 1, nicht vollständig opak sondem durchscheinend. D.h. die Merkmalträgerschicht 5 besitzt eine geringere Opazität als die Funktionsschicht 2 und ist transluzent. Über der Merkmalträgerschicht 5 liegen übereinander zwei weitere Aufbauschichten 3c, 3d. Die Aufbauschicht 3d bildet die plane Oberseite 10 des Sicherheitselementes 1. Die zusätzlichen Aufbauschichten 3c, 3d bestehen zweckmäßig aus demselben Material wie die Aufbauschichten 3a, 3bund sind wie diese transparent. Die Merkmalträgerschicht 5 ist mit einem Druckmuster 6a, 6b versehen, das im Einsichtbereich des durch den Freischnitt 4 gebildeten Innenfensters 8 liegt. Das Druckmuster 6a, 6b kann, wie in Fig. 3 angedeutet, auf beiden Seiten der Merkmalträgerschicht 5 ausgebildet sein.

Desweiteren ist auf der Oberseite der an die Merkmalträgerschicht 5 angrenzenden Aufbauschicht 3c ein weiteres Sicherheitsmerkmal ausgebildet, zum Beispiel in Gestalt eines weiteren Druckmusters 6c, etwa eines Designmusters. Anstelle eines Druckmusters 6c oder zusätzlich dazu kann auch ein in eine oder beide der Aufbauschichten 3c, 3d eingebettetes Merkmal vorgesehen sein.

Ein - wie in Fig. 2c angedeutet - lotrecht von der abgewandten Seite auf das Sicherheitselement 1 blickender Betrachter erkennt bei dem in Fig. 2c dargestellten Ausführungsbeispiel Innenfenster 8 mit einer transluzenten, also zumindest leicht durscheinenden Rückseite. Bestimmend für den transluzenten Eindruck ist die Beschaffenheit, genauer: die Opazität der der Merkmalträgerschicht 5. In dem Innenfenster 8 erkennt der Betrachter klar die Druckmuster 6c und 6a; das Druckmuster 6b erscheint dagegen je nach Opazität der Merkmalträgerschicht 5 abgeschwächt. Auf diese Weise wird der Eindruck einer unterschiedlichen Tiefenlage der Druckmuster herbeigeführt. Fig. 2d zeigt den gleichen Grundaufbau wie Fig. 2c in umgekehrter Anordnung. Im Unterschied zu Fig. 2c ist auf der Merkmalträgerschicht 5 zudem ein Druckmuster 6 nur einseitig vorhanden; dafür sind in der Merkmalträgerschicht 5 zusätzlich eingebettete Merkmale 7 ausgebildet, z.B. fluoreszierende Elemente.

Einem - wie in Fig. 2d angedeutet - lotrecht auf die das Innenfenster 8 enthaltende Seite des Sicherheitselements 1 blickenden Betrachter erscheint bei dem in Fig. 2d dargestellten Ausführungsbeispiel das Innenfenster 8 transluzent. Bestimmend für den transluzenten Eindruck ist die Beschaffenheit der Merkmalträgerschicht 5. In dem Innenfenster 8 erkennt der Betrachter deutlich das Druckmuster 6a und die eingebetteten Merkmale 7. Entsprechend der Transluzenz der Merkmalträgerschicht 5 erkennt er abgeschwächt das Druckmuster 6c. Damit wird wiederum der Eindruck einer unterschiedlichen Tiefenlage unterstützt.

Durch die in Bezug auf die Merkmalträgerschicht 5 asymmetrisch aufgebrachten Sicherheitsmerkmale 6, 7 ergeben sich für einen Betrachter zudem unterschiedliche Erscheinungsbilder abhängig davon, von welcher Seite das Sicherheitselement 1 betrachtet wird. So ist etwa in Fig. 2c in Betrachtung von der Oberseite her das Druckmuster 6c auf der Aufbauschicht 3c gut erkennbar, während dasselbe Druckmuster 6c bei Betrachtung von der Unterseite her schlecht oder gar nicht erkennbar ist. Ebenso sind wechselweise die auf die Merkmalträgerschicht 5 aufgebrachten Druckmuster 6a, 6b jeweils von einer Seite gut und von der gegenüberliegenden Seite schlechter erkennbar. Sind bei der in Fig. 2d angedeuteten Variante die Aufbauschichten 3a, 3b, 3c, 3d in gleicher Weise transparent, ist das zentral ausgebildete eingebettete Merkmal 7 von beiden Betrachtungsseiten her aus gleich gut erkennbar.

Die Ausführungen nach den Fig. 2c, 2d lassen sich mit den anderen Ausführungsformen kombinieren.

Fig. 3 veranschaulicht eine Ausführung eines Sicherheitselementes 1 mit sieben Schichten, das einen Sicherheitsfaden nachbildet, wie er z.B. von Banknoten her bekannt ist. Das Sicherheitselement 1 umfasst eine zentrale Merkmalträgerschicht 5, die in diesem Falle transparent und auf einer Seite vollflächig mit einer glänzenden, reflektierenden Druckschicht 6 belegt ist. In einer Variante ist die Merkmalsträgerschicht 5 selbst glänzend und reflektierend. Sie kann hierzu z.B. metallische Partikel enthalten.

Zu beiden Seiten der zentralen Merkmalträgerschicht 5 ist jeweils ein Dreischichtaufbau bestehend aus zwei Aufbauschichten 3a, 3b bzw. 3c, 3d und einer mittigen Funktionsschicht 2c bzw. 2d angeordnet. Beide Funktionsschichten 2c, 2d sind jeweils mit einer Folge von Freischnitten 4a, 4b versehen. Die Freischnitte 4a, 4b sind zweckmäßig jeweils in regelmäßigen Abständen entlang einer Linie ausgebildet. Die Folgen von Freischnitten 4a, 4b sind so zueinander ausgerichtet, dass die Freischnitte in der jeweils ersten Funktionsschicht genau Materialbereichen in der jeweils anderen Funktionsschicht gegenüberliegen.

Blickt ein Betrachter - wie in der Fig. angedeutet - in lotrechter Aufsicht auf die Oberfläche 10 des Sicherheitselements 1, sieht er durch die transparente Aufbauschicht 3a zum einen die vollflächigen Bereiche 12a in der nächstliegenden Funktionsschicht 2a. In den dazwischenliegenden Freischnitten 4a sieht er zum anderen jeweils Abschnitte der glänzenden, auf der Merkmalträgerschicht 5 ausgebildeten Druckschicht 6. Diese Abschnitte der Merkmalträgerschicht 5 liegen dabei klar wahrnehmbar in einer größeren Tiefe als die vollflächigen Bereiche 12a der Funktionsschicht 2.

In einer Variante kann die Druckschicht 6 nicht vollflächig gestaltet sein. In diesem Fall nimmt ein Betrachter bei Aufsicht auf das Sicherheitselement 1 in den Freischnitten 4a entsprechend dem Muster der Druckschicht 6 auch die vollflächigen Bereiche 12b der abgewandten Funktionsschicht 2b wahr. Dadurch verstärkt sich der Tiefeneindruck.

Eine weitere, in Fig. 4 angedeutete Variante basiert auf dem Grundaufbau entsprechend Figur 1. Anders als bei diesem ist jedoch die Merkmalträgerschicht 5 ebenfalls mit wenigstens einem Ausschnitt versehen, und unter der Merkmalträgerschicht 5 ist eine weitere Aufbauschicht 3e angeordnet. Die weitere Aufbauschicht 3 e besteht aus demselben Material wie die beiden anderen Aufbauschichten 3a, 3b, d.h. sie ist transparent oder transluzent. Beim Laminieren füllt das Material der weiteren Aufbauschicht 3e zusammen mit dem Material der anderen Aufbauschichten 3a, 3b den Ausschnitt in der Merkmalträgerschicht 5 aus und erzeugt damit ein zweites Innenfenster 17 auf der abgewandten Seite.

Der Ausschnitt in der Merkmalträgerschicht 5 besitzt eine andere Geometrie als der Freischnitt 4 in der Funktionsschicht 2. Freischnitt 4 und Ausschnitt in der Merkmalträgerschicht 5 überlagern sich teilweise. Entsprechend liegen sich die Innenfenster 8, 17 teilweise gegenüber. Es entstehen dadurch in dem Sicherheitselement 1 unterschiedliche aneinander angrenzende Bereiche: ein Durchsichtbereich 18 von der oberen Oberfläche 10 bis zu unteren Oberfläche 11, ein Einsichtbereich 16, der einem Innenfenster gemäß dem Grundaufbau nach Figur 1 entspricht, sowie ein Einsichtbereich 19, der durch die Funktionsschicht 2 begrenzt wird. Auf oder in der Merkmalträgerschicht 5 können wiederum Sicherheitsmerkmale 6, 7 angeordnet sein. Auch an der Unterseite der Funktionsschicht 2 können - nicht gezeigt - in dem durch das Innenfenster 17 einsichtigen Bereich weitere Sicherheitsmerkmale angeordnet sein.

Die in Fig. 4 angedeutete Ausführungsvariante liefert ein Sicherheitselement 1, das für einen Betrachter, wie in Fig. 4 angedeutet, von beiden Betrachtungsseiten her geometrisch unterschiedliche Innenfenster 8, 17 zeigt. Die Innenfenster 8, 17 liefern auch unterschiedliche Ansichten: im Innenfenster 8 sind die Sicherheitsmerkmal 6, 7 zu erkennen, im Innenfenster 17 in dessen Einsichtbereich 19 die Unterseite der Funktionsschicht 2. Die Funktionsschicht 2 kann ebenfalls Sicherheitsmerkmale tragen, die sich zweckmäßig von den im Einsichtbereich 16 des Innenfensters 8 angeordneten Sicherheitsmerkmalen 6, 7 unterscheiden.

Die Einsichtbereiche 16, 19, in denen sich die Funktionsschicht 2 und die Merkmalschicht 5 nicht überlagern, erscheinen zudem bei Betrachtung im Gegenlicht als geringer opak im Vergleich zu den umliegenden Bereichen, in denen sich Funktionsschicht 2 und die Merkmalschicht 5 überlagern. Die unterschiedliche Transparenz im Gegenlicht bildet ein weiteres für das Sicherheitselement 1 charakteristisches Merkmal.
Unter Beibehaltung des grundlegenden Gedankens, in einem Mehrschichtaufbau Innenfenster 8 zu schaffen, indem eine zentrale Funktionsschicht 2 mit Freischnitten 4 versehen wird, die beim Laminieren durch Material der angrenzenden Aufbauschichten 3a, 3b aufgefüllt werden, und weiter eine Merkmalträgerschicht 5 vorzusehen, die im Einsichtbereich des Fensters 8 Sicherheitsmerkmale 6, 7 trägt, gestattet die Erfindung eine Reihe von weiteren Varianten, die hier nicht im einzelnen ausgeführt sind. Wird die Erfindung etwa in einer Ausweiskarte eingesetzt, können in derselben Karte nebeneinander mehrere Ausführungsformen realisiert sein. Grundsätzlich gibt es keine Beschränkung hinsichtlich der Anzahl der übereinander angeordneten Sets von Funktions- und Aufbauschichten bzw. der Anzahl von übereinander angeordneten Grundaufbauten. Insbesondere lassen sich durch Einbringen von weiteren transparenten Aufbauschichten gezielt weitere Ebenen in einem Sicherheitselement erzeugen, auf denen Sicherheitsmerkmale ausgebildet werden können. Durch geeignete Kombination von Schichtfolgen in entsprechenden Materialien lässt sich eine Vielzahl von Durchsicht- und Tiefeneffekten erzeugen. Insbesondere können unterschiedliche Durchsicht- oder Tiefeneffekte auf demselben Sicherheitselement 1 realisiert sein. Ferner ist es selbstverständlich möglich, ein Sicherheitselement 1 mit Innenfenstern 8 nach seiner Fertigstellung mit weiteren Merkmalen zu versehen, die insbesondere auch oder über in den Innenfenstern angeordnet sein können. Beispiele für solche Merkmale sind etwa Personalisierung-oder Individualisierungsinformationen. Für die einzelnen Schichten 2, 3a, 3b, 5 können weiterhin auch andere, insbesondere für die Herstellung von Karten bekannte Materialien eingesetzt werden. Allerdings kann es bei Verwendung anderer Materialien erforderlich sein, in den Freischnitten 4 Einleger vorzusehen, um zu gewährleisten, dass das fertige Sicherheitselement 1 plane Oberflächen 10, 11 aufweist. In Versuchen erwies sich die Verwendung von Einlegern bei der Verwendung von PVC als zweckmäßig.

## Patentansprüche

1. Mehrschichtiges Sicherheitselement mit einer opaken Funktionsschicht (2), die zwischen zwei Aufbauschichten (3a, 3b) aus transmissivem Material angeordnet ist, wobei die Schichten (2, 3a, 3b) durch Laminieren zu einem Flächenkörper mit planen Oberflächen (10, 11) verbunden sind, wobei die opake Funktionsschicht (2) wenigstens einen Freischnitt (4) aufweist und der wenigstens eine Freischnitt (4) ausgefüllt ist mit transmissivem Material der Aufbauschichten (3a, 3b), **dadurch gekennzeichnet, daß** auf einer der Aufbauschichten (3a, 3b) weiterhin eine Merkmalträgerschicht (5) angeordnet ist, und in der Merkmalträgerschicht (5) und/oder auf der Merkmalträgerschicht (5) zwischen Merkmalträgerschicht (5) und Funktionsschicht (2) ein Sicherheitsmerkmal (6, 7) ausgebildet ist, das sich zumindest teilweise in die Fläche des wenigstens einen Freischnittes (4) erstreckt.

2. Mehrschichtiges Sicherheitselement nach Anspruch 1, **dadurch gekennzeichnet, dass** zwischen Funktionsschicht (2) und Merkmalträgerschicht (5) eine weitere Aufbauschicht (3c) aus transmissivem Material angeordnet ist, welche an eine andere Aufbauschicht (3b) angrenzt, und zumindest ein Sicherheitselement (6) zwischen der dritten Aufbauschicht (3c) und der angrenzenden Aufbauschicht (3b) angeordnet ist.

3. Mehrschichtiges Sicherheitselement nach Anspruch 1 oder 2, **dadurch gekennzeichnet, dass** die opake Funktionsschicht (2) eine Dicke von weniger als 150 µm besitzt.

4. Mehrschichtiges Sicherheitselement nach Anspruch 1 oder 2, **dadurch gekennzeichnet, dass** die Aufbauschichten (3a, 3b) ganz oder im wesentlichen aus Polycarbonat bestehen.

5. Mehrschichtiges Sicherheitselement nach Anspruch 1 oder 2, **dadurch gekennzeichnet, dass** es zumindest eine weitere Aufbauschicht (3c, 3d) aus transmissivem Material sowie eine weitere, zweite opake Funktionsschicht (2a, 2b) aufweist und die weitere Funktionsschicht (2a, 2b) ebenfalls wenigstens einen Freischnitt (4) aufweist.

6. Mehrschichtiges Sicherheitselement nach Anspruch 5, **dadurch gekennzeichnet, dass** die weitere Aufbauschicht (3c, 3d) und die weitere Funktionsschicht (2) auf der abgewandten Seite der Merkmalträgerschicht (5) angeordnet sind.

7. Mehrschichtiges Sicherheitselement nach Anspruch 5, **dadurch gekennzeichnet, dass** die Positionen der Freischnitte (4) in den Funktionsschichten (2) ohne Überlappung versetzt zueinander angeordnet sind.

8. Mehrschichtiges Sicherheitselement nach Anspruch 1 oder 2, **dadurch gekennzeichnet, dass** auf einer von der Merkmalträgerschicht (5) abgewandten Seite einer Aufbauschicht (3c) eine weitere transmissive Aufbauschicht (3d) angeordnet ist und zwischen den Aufbauschichten (3c, 3d) ein Sicherheitsmerkmal (6c) ausgebildet ist.

9. Mehrschichtiges Sicherheitselement nach Anspruch 1 oder 2, **dadurch gekennzeichnet, dass** auf oder in einer weiteren Aufbauschicht (3d) ein weiteres Sicherheitsmerkmal (13) ausgebildet ist, das sich zumindest teilweise über die Fläche des Freischnitts (4) erstreckt.

10. Mehrschichtiges Sicherheitselement nach einem der vorhergehenden Ansprüche, **dadurch gekennzeichnet, dass** wenigstens eine Aufbauschicht (3a, 3b, 3c, 3d) aus transparentem Material besteht.

11. Mehrschichtiges Sicherheitselement nach einem der vorhergehenden Ansprüche, **dadurch gekennzeichnet, dass** die Merkmalträgerschicht (5) ebenfalls mit wenigstens einem Ausschnitt versehen ist, und unter der Merkmalträgerschicht (5) eine weitere Aufbauschicht (3e) aus transmissivem Material angeordnet ist, wobei der wenigstens eine Ausschnitt ausgefüllt ist mit transmissivem Material der Aufbauschichten (3b, 3e).

12. Verfahren zur Herstellung eines mehrschichtigen Sicherheitselementes mit einem Flächenkörper mit planen Oberflächen, **gekennzeichnet durch** folgende Schritte:
- Bereitstellen einer opaken Funktionsschicht (2), in der wenigstens ein Freischnitt (4) angelegt ist,
- Bereitstellen zweier transparenter Aufbauschichten (3ä, 3b),
- Bereitstellen einer Merkmalträgerschicht (5),
- Ausbilden eines Sicherheitsmerkmals (6) in der Merkmalträgerschicht (5) und/oder auf der Merkmalträgerschicht (5) zwischen der Merkmalträgerschicht (5) und Funktionsschicht (2),
- Übereinanderplazieren der Funktionsschicht (2), der Aufbauschichten (3a, 3b) und der Merkmalträgerschicht (5) so, das sich das Sicherheitsmerkmal (6, 7) zumindest teilweise in die Fläche des wenigstens einen Freischnittes (4) erstreckt,
- Laminieren der übereinanderplazierten Schichten (2, 3a, 3b, 5) zu einem Flächenkörper derart, dass beim Laminieren das Material der Aufbauschichten (3a, 3b) den Freischnitt (4) in der opaken Funktionsschicht (2) ausfüllt.

13. Verfahren nach Anspruch 12 **dadurch gekennzeichnet, dass** der Freischnitt (4) in der bereitgestellten opaken Funktionsschicht (2) so dimensioniert wird, dass eine beim Laminieren eintretende Schrumpfung berücksichtigt ist.

14. Verfahren nach Anspruch 12 **dadurch gekennzeichnet, dass** die Merkmalträgerschicht (5) durch ihre Beschaffenheit ein Sicherheitsmerkmal bildet oder auf und/oder in der Merkmalträgerschicht (5) ein Sicherheitsmerkmal (6, 7) ausgebildet ist.

15. Verfahren nach Anspruch 12 **dadurch gekennzeichnet** durch folgende weitere Schritte:
- Bereitstellen einer weiteren, dritten Aufbauschicht (3c)
- Plazieren der weiteren Aufbauschicht (3c) zwischen Merkmalträgerschicht (5) und Funktionsschicht (2), so daß sie an eine andere Aufbauschicht (3b) angrenzt, und
- Anordnen zumindest eines Sicherheitselements (6) zwischen der weiteren Aufbauschicht (3c) und der angrenzenden Aufbauschicht (3b).

## Claims

1. A multilayer security element with an opaque functional layer (2) arranged between two build-up layers (3a, 3b) of a transmissive material, wherein the layers (2, 3a, 3b) are connected by lamination to form an areal body with planar surfaces (10, 11), wherein the opaque functional layer (2) has at least one cutout (4) and the at least one cutout (4) is filled up with transmissive material of the build-up layers (3a, 3b), **characterized in that** on one of the build-up layers (3a, 3b) there is further arranged a feature carrier layer (5), and in the feature carrier layer (5) and/ or on the feature carrier layer (5) between the feature carrier layer (5) and the functional layer (2) a security feature (6, 7) is formed which extends at least partially into the area of the at least one cutout (4).

2. The multilayer security element according to claim 1, **characterized in that** between the functional layer (2) and the feature carrier layer (5), there is arranged a further build-up layer (3c) of a transmissive material which adjoins another build-up layer (3b), and at least one security element (6) is arranged between the third build-up layer (3c) and the adjoining build-up layer (3b).

3. The multilayer security element according to claim 1 or 2, **characterized in that** the opaque functional layer (2) has a thickness of less than 150 µm.

4. The multilayer security element according to claim 1 or 2, **characterized in that** the build-up layers (3a, 3b) consist completely or substantially of polycarbonate.

5. The multilayer security element according to claim 1 or 2, **characterized in that** it has at least one further build-up layer (3c, 3d) of transmissive material, and a further, second opaque functional layer (2a, 2b) and the further functional layer (2a, 2b) likewise has at least one cutout (4).

6. The multilayer security element according to claim 5, **characterized in that** the further build-up layer (3c, 3d) and the further functional layer (2) are arranged on the side of the feature carrier layer (5) that faces away.

7. The multilayer security element according to claim 5, **characterized in that** the positions of the cutouts (4) in the functional layers (2) are arranged offset from one another without overlap.

8. The multilayer security element according to claim 1 or 2, **characterized in that** on one side of a build-up layer (3c) facing away from the feature carrier layer (5) there is arranged a further transmissive build-up layer (3d) and a security feature (6c) is formed between the build-up layers (3c, 3d).

9. The multilayer security element according to claim 1 or 2, **characterized in that** on or in a further build-up layer (3d), a further security feature (13) is formed which extends at least partially over the area of the cutout (4).

10. The multilayer security element according to any of the preceding claims, **characterized in that** at least one build-up layer (3a, 3b, 3c, 3d) consists of a transparent material.

11. The multilayer security element according to any of the preceding claims, **characterized in that** the feature carrier layer (5) is likewise equipped with at least one gap, and below the feature carrier layer (5) there is arranged a further build-up layer (3e) of a transmissive material, wherein the at least one gap is filled up with transmissive material of the build-up layers (3b, 3e).

12. A method for manufacturing a multilayer security element with an areal body with planar surfaces, **characterized by** the following steps of:
- making available an opaque functional layer (2) in which at least one cutout (4) is prepared,
- making available two transparent build-up layers (3a, 3b),
- making available a feature carrier layer (5),
- forming a security feature (6) in the feature carrier layer (5) and/or on the feature carrier layer (5) between the feature carrier layer (5) and the functional layer (2),
- placing above one another the functional layer (2), the build-up layers (3a, 3b) and the feature carrier layer (5), so that the security feature (6, 7) extends at least partially into the area of the at least one cutout (4),
- laminating the layers (2, 3a, 3b, 5) placed above one another to form an areal body, such that during lamination the material of the build-up layers (3a, 3b) fills up the cutout (4) in the opaque functional layer (2).

13. The method according to claim 12, **characterized in that** the cutout (4) in the opaque functional layer (2) made available is dimensioned such that a shrinkage occurring during lamination is taken account of.

14. The method according to claim 12, **characterized in that** the feature carrier layer (5) forms a security feature through its properties or a security feature (6, 7) is formed on and/or in the feature carrier layer (5).

15. The method according to claim 12, **characterized by** the following further steps of:
- making available a further, third build-up layer (3c),
- placing the further build-up layer (3c) between the feature carrier layer (5) and the functional layer (2) so that it adjoins another build-up layer (3b), and
- arranging at least one security element (6) between the further build-up layer (3c) and the adjoining build-up layer (3b).

## Revendications

1. Élément de sécurité multicouche ayant une couche fonctionnelle (2) opaque agencée entre deux couches constitutives (3a, 3b) en matériau transmissif, cependant que les couches (2, 3a, 3b) sont jointes par laminage de manière à obtenir un corps en feuille à surfaces planes (10, 11), cependant que la couche fonctionnelle (2) opaque comporte au moins un dégagement (4) et que le au moins un dégagement (4) est rempli avec du matériau transmissif des couches constitutives (3a, 3b), **caractérisé en ce que**, sur une des couches constitutives (3a, 3b), en outre une couche de support de caractéristique (5) est agencée, et que, dans la couche de support de caractéristique (5) et/ou sur la couche de support de caractéristique (5), entre la couche de support de caractéristique (5) et la couche fonctionnelle (2), une caractéristique de sécurité (6, 7) s'étendant au moins partiellement dans la surface du au moins un dégagement (4) est réalisée.

2. Élément de sécurité multicouche selon la revendication 1, **caractérisé en ce que**, entre la couche fonctionnelle (2) et la couche de support de caractéristique (5), une couche constitutive supplémentaire (3c) en matériau transmissif est agencée, laquelle est adjacente à une autre couche constitutive (3b), et qu'au moins un élément de sécurité (6) est agencé entre la troisième couche constitutive (3c) et la couche constitutive (3b) adjacente.

3. Élément de sécurité multicouche selon la revendication 1 ou 2, **caractérisé en ce que** la couche fonctionnelle (2) opaque a une épaisseur inférieure à 150 µm.

4. Élément de sécurité multicouche selon la revendication 1 ou 2, **caractérisé en ce que** les couches constitutives (3a, 3b) consistent entièrement ou essentiellement en du polycarbonate.

5. Élément de sécurité multicouche selon la revendication 1 ou 2, **caractérisé en ce qu'**il comporte au moins une couche constitutive supplémentaire (3c, 3d) en matériau transmissif ainsi qu'une deuxième couche fonctionnelle (2a, 2b) opaque, supplémentaire, et que la couche fonctionnelle (2a, 2b) supplémentaire comporte également au moins un dégagement (4).

6. Élément de sécurité multicouche selon la revendication 5, **caractérisé en ce que** la couche constitutive supplémentaire (3c, 3d) et la couche fonctionnelle (2) supplémentaire sont agencées du côté opposé de la couche de support de caractéristique (5).

7. Élément de sécurité multicouche selon la revendication 5, **caractérisé en ce que** les positions des dégagements (4) dans les couches fonctionnelles (2) sont agencées de manière décalée les unes par rapport aux autres sans chevauchement.

8. Élément de sécurité multicouche selon la revendication 1 ou 2, **caractérisé en ce que**, sur un côté, détourné de la couche de support de caractéristique (5), d'une couche constitutive (3c), une couche constitutive (3d) transmissive supplémentaire est agencée et que, entre les couches constitutives supplémentaires (3c, 3d), une caractéristique de sécurité (6c) est réalisée.

9. Élément de sécurité multicouche selon la revendication 1 ou 2, **caractérisé en ce que** sur ou dans une couche constitutive (3d), une caractéristique de sécurité (13) s'étendant au moins partiellement par-dessus la surface du dégagement (4) est réalisée.

10. Élément de sécurité multicouche selon une des revendications précédentes, **caractérisé en ce qu'**au moins une couche constitutive (3a, 3b, 3c, 3d) consiste en un matériau transparent.

11. Élément de sécurité multicouche selon une des revendications précédentes, **caractérisé en ce que** la couche de support de caractéristique (5) est également pourvue d'au moins une découpure, et que, sous la couche de support de caractéristique (5), une couche constitutive (3e) supplémentaire en matériau transmissif est agencée, cependant que la au moins une découpure est remplie avec du matériau transmissif des couches constitutives (3b, 3e).

12. Procédé de fabrication d'un élément de sécurité multicouche ayant un corps en feuille à surfaces planes, **caractérisé par** les étapes suivantes :
- mise à disposition d'une couche fonctionnelle (2) opaque dans laquelle au moins un dégagement (4) est créé,
- mise à disposition de deux couches constitutives (3a, 3b) transparentes,
- mise à disposition d'une couche de support de caractéristique (5),
- réalisation d'une caractéristique de sécurité (6) dans la couche de support de caractéristique (5) et/ou sur la couche de support de caractéristique (5) entre la couche de support de caractéristique (5) et la couche fonctionnelle (2),
- placement les unes sur les autres de la couche fonctionnelle (2), des couches constitutives (3a, 3b) et de la couche de support de caractéristique (5), de telle façon que la caractéristique de sécurité (6, 7) s'étend au moins partiellement dans la surface du au moins un dégagement (4),
- laminage des couches (2, 3a, 3b, 5) placées les unes sur les autres, de manière à obtenir un corps en feuille, de telle façon que, lors du laminage, le matériau des couches constitutives (3a, 3b) remplit le dégagement (4) dans la couche fonctionnelle (2) opaque.

13. Procédé selon la revendication 12, **caractérisé en ce que** le dégagement (4) dans la couche fonctionnelle (2) opaque mise à disposition est dimensionné de telle façon qu'une rétraction se produisant lors du laminage est prise en compte.

14. Procédé selon la revendication 12, **caractérisé en ce que** la couche de support de caractéristique (5) constitue par sa nature une caractéristique de sécurité ou que, sur et/ou dans la couche de support de caractéristique (5), une caractéristique de sécurité (6, 7) est réalisée.

15. Procédé selon la revendication 12, **caractérisé par** les étapes supplémentaires suivantes :
- mise à disposition d'une troisième couche constitutive (3c), supplémentaire
- placement de la couche constitutive (3c) entre la couche de support de caractéristique (5) et la couche fonctionnelle (2), de telle façon qu'elle est adjacente à une autre couche constitutive (3b), et
- agencement d'au moins un élément de sécurité (6) entre la couche constitutive (3c) supplémentaire et la couche constitutive (3b) adjacente.
